# EUROPÄISCHE PATENTANMELDUNG

(11) **EP 4 491 148 A1**
(43) Veröffentlichungstag der Anmeldung: **15.01.2025**
(21) Anmeldenummer: 23184433.3
(22) Anmeldetag: 10.07.2023
(51) Int. Cl.: A61C 19/02, B65D 5/50, A61C 13/00

(54) **AUFNAHMEBEHÄLTER FÜR EINEN DENTALEN ROHLING**

(71) Anmelder: Ivoclar Vivadent AG, 9494 Schaan (LI)
(72) Erfinder: KÜBLER, Saskia, 9470 Buchs (CH); HEINEN, Jens, 9475 Sevelen (CH)
(74) Vertreter: Baldus, Oliver

(57) **Zusammenfassung**

Die Erfindung betrifft einen Aufnahmebehälter (100) für einen dentalen Rohling (103), mit einer Aussparung (105) zum Einlegen des dentalen Rohlings (103); und einer vorspringenden Klemmnase (107) zum Festklemmen des Rohlings (103), die in die Aussparung (105) hineinragt.

## Beschreibung

Die vorliegende Erfindung betrifft einen Aufnahmebehälter für einen dentalen Rohling und ein Verfahren zum Aufnehmen eines dentalen Rohlings.

Es ist die technische Aufgabe der vorliegenden Erfindung, einen dentalen Rohling sicher zu lagern und zu versenden.

Diese Aufgabe wird durch Gegenstände nach den unabhängigen Ansprüchen gelöst. Technisch vorteilhafte Ausführungsformen sind Gegenstand der abhängigen Ansprüche, der Beschreibung und der Zeichnungen.

Gemäß einem ersten Aspekt wird diese technische Aufgabe durch einen Aufnahmebehälter für einen dentalen Rohling gelöst, mit einer Aussparung zum Einlegen des Rohlings; und einer vorspringenden Klemmnase zum Festklemmen des Rohlings, die in die Aussparung hineinragt. Dadurch wird beispielsweise der technische Vorteil erreicht, dass dentale Rohlinge für einen Transport und Lagerung sicher aufbewahrt werden können.

In einer technisch vorteilhaften Ausführungsform des Aufnahmebehälters umfasst der Aufnahmebehälter zwei vorspringende Klemmnasen. Dadurch wird beispielsweise der technische Vorteil erreicht, dass der dentale Rohling besser in der Aussparung abgestützt wird.

In einer weiteren technisch vorteilhaften Ausführungsform des Aufnahmebehälters sind die beiden Klemmnasen auf einer Seite der Aussparung angeordnet. Dadurch wird beispielsweise der technische Vorteil erreicht, dass der dentale Rohling mittels zwei Abstützpunkten fixiert wird.

In einer weiteren technisch vorteilhaften Ausführungsform des Aufnahmebehälters sind die beiden Klemmnasen auf gegenüberliegenden Seiten der Aussparung angeordnet. Dadurch wird beispielsweise der technische Vorteil erreicht, dass sich die Fixierung des dentalen Rohlings in der Aufnahme weiter verbessert.

In einer weiteren technisch vorteilhaften Ausführungsform des Aufnahmebehälters weist die Aussparung einen rechteckigen Querschnitt auf. Dadurch wird beispielsweise der technische Vorteil erreicht, dass blockförmige dentale Rohlinge aufgenommen werden können.

In einer weiteren technisch vorteilhaften Ausführungsform des Aufnahmebehälters umfasst die Aussparung einen federnden Boden. Dadurch wird beispielsweise der technische Vorteil erreicht, dass Beschädigungen des dentalen Rohlings weiter vermindert werden können.

In einer weiteren technisch vorteilhaften Ausführungsform des Aufnahmebehälters umfasst der Aufnahmebehälter einen abnehmbaren Deckel. Dadurch wird beispielsweise der technische Vorteil erreicht, dass der dentale Rohling auf einfache Weise entnommen werden kann.

In einer weiteren technisch vorteilhaften Ausführungsform des Aufnahmebehälters ist die Klemmnase durch einen rundlichen Vorsprung gebildet. Dadurch wird beispielsweise der technische Vorteil erreicht, dass ein sicherer Kraftschluss zwischen dem Aufnahmebehälter und dem dentalen Rohling erreicht wird.

In einer weiteren technisch vorteilhaften Ausführungsform des Aufnahmebehälters umfasst die Aussparung einen Abschnitt zum Einlegen eines Halteabschnitts des Rohlings. Dadurch wird beispielsweise der technische Vorteil erreicht, dass auch Rohlinge mit mechanischer Frässchnittstelle als Haltevorrichtung aufgenommen werden können.

In einer weiteren technisch vorteilhaften Ausführungsform des Aufnahmebehälters ist die Aussparung in einem Karton gebildet. Dadurch wird beispielsweise der technische Vorteil erreicht, dass der Aufnahmebehälter mit geringem Aufwand hergestellt werden kann.

In einer weiteren technisch vorteilhaften Ausführungsform des Aufnahmebehälters ist der Karton in den Aufnahmebehälter einsetzbar. Dadurch wird beispielsweise der technische Vorteil erreicht, dass unterschiedliche Kartons mit unterschiedlichen Aussparungen eingesetzt werden können.

In einer weiteren technisch vorteilhaften Ausführungsform des Aufnahmebehälters umfasst der Karton einen Abstandsabschnitt zum Abstützen des Kartons innerhalb des Aufnahmebehälters. Dadurch wird beispielsweise der technische Vorteil erreicht, dass sich die Lagerung des dentalen Rohlings noch weiter verbessert.

In einer weiteren technisch vorteilhaften Ausführungsform des Aufnahmebehälters ist die Klemmnase durch den Karton gebildet. Dadurch wird beispielsweise der technische Vorteil erreicht, dass die Klemmnase auf einfache Weise durch Ausstanzen gebildet werden kann.

In einer weiteren technisch vorteilhaften Ausführungsform des Aufnahmebehälters bildet der Karton einen Boden, auf den der dentale Rohling auflegbar ist. Dadurch wird beispielsweise der technische Vorteil erreicht, dass der dentale Rohling rückseitig abgestützt wird.

Gemäß einem zweiten Aspekt wird diese technische Aufgabe durch ein Verfahren zum Aufnehmen eines dentalen Rohlings gelöst, mit den Schritten eines Einlegens des Rohlings in eine Aussparung; und eines Festklemmens des Rohlings in der Aussparung mit einer vorspringenden Klemmnase. Durch das Verfahren werden die gleichen technischen Vorteile wie durch den Aufnahmebehälter nach dem ersten Aspekt erreicht.

Ausführungsbeispiele der Erfindung sind in den Zeichnungen dargestellt und werden im Folgenden näher beschrieben.

Es zeigen:
- Fig. 1: eine schematische Ansicht eines Aufnahmebehälter ohne dentalen Rohling;
- Fig. 2: eine schematische Ansicht des Aufnahmebehälter mit dentalem Rohling;
- Fig. 3: eine perspektivische Ansicht des Aufnahmebehälters mit mehreren dentalen Rohlingen;
- Fig. 4: eine technische Zeichnung eines Kartons zum Herstellen des Aufnahmebehälters;
- Fig. 5: eine technische Zeichnung eines weiteren Kartons zum Herstellen des Aufnahmebehälters;
- Fig. 6: eine technische Zeichnung eines weiteren Kartons zum Herstellen des Aufnahmebehälters; und
- Fig. 7: ein Blockdiagramm zum Aufnehmen eines dentalen Rohlings.

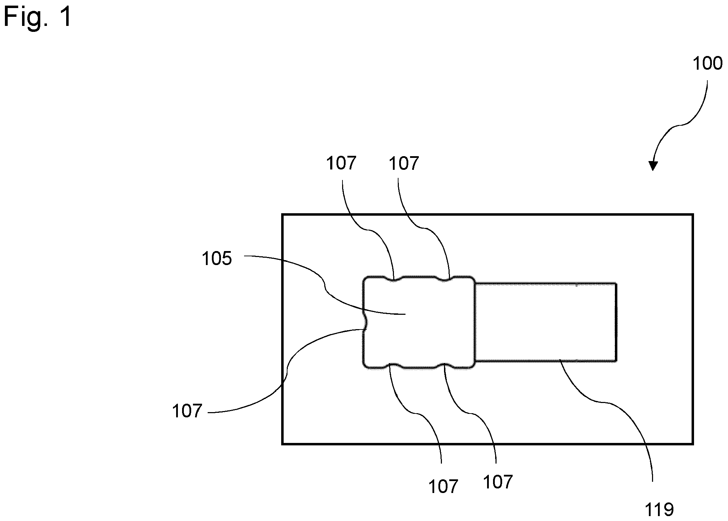

Fig. 1 zeigt eine schematische Ansicht eines Aufnahmebehälters 100 ohne eingelegten dentalen Rohling. Der Aufnahmebehälter 100 umfasst eine Aussparung 105 zum Einlegen des Rohlings. Die Aussparung umfasst fünf vorspringende Klemmnasen 107 zum Festklemmen des Rohlings, die seitlich in die Aussparung 105 hineinragen.

Zwei Klemmnasen 107 sind auf der einen Seite der Aussparung 105 angeordnet und zwei Klemmnasen 107 sind auf der anderen Seite der Aussparung angeordnet. Mittels der gegenüber angeordneten Klemmnasen 107 kann der dentale Rohling sicher in der Aussparung 105 gehalten werden, so dass dieser auch beim Umdrehen des Aufnahmebehälters 100 nicht herausfällt. Die Aussparung 105 umfasst einen Abschnitt 119, in dem ein Halteabschnitt des dentalen Rohlings angeordnet werden kann. Die Klemmnasen 107 befinden sich jedoch in dem Bereich, in dem der dentale Rohling einen blockförmigen Körper aufweist.

Der Aufnahmebehälter 100 dient zum Transportschutz und zur Lagerung des dentalen Rohlings. Der Aufnahmebehälter 100 ermöglicht eine materialuniversale Arretierung anhand von Haltepunkten im Bereich der Aussparung 105. Eine Blocktoleranz der dentalen Rohlinge wird durch die elastischen Klemmnasen 107 als Haltepunkte ausgeglichen. Die Klemmnasen 107 stabilisieren den dentalen Rohling in der Mittellage durch Haltelaschen. Dennoch kann der dentale Rohling durch einen Benutzer von Hand entnommen werden.

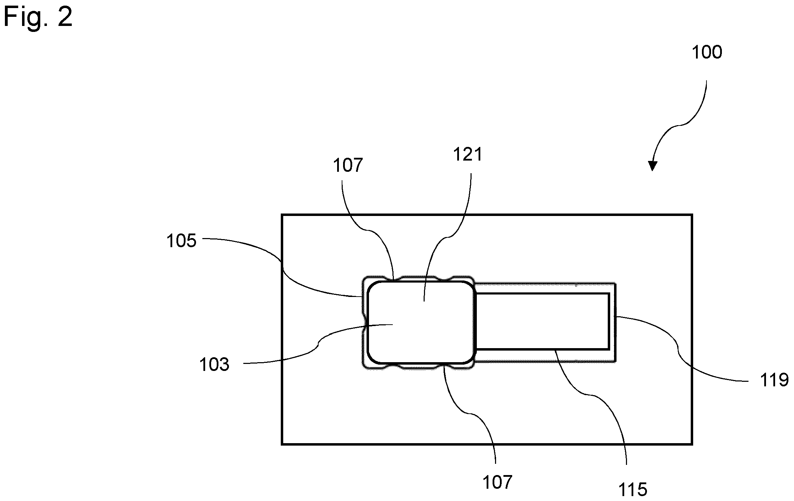

Fig. 2 zeigt eine schematische Ansicht des Aufnahmebehälters 100 mit eingelegtem dentalem Rohling 103. Der dentale Rohling 103 umfasst einen blockförmigen Körper 121 für dentale Anwendungen und einen Halteabschnitt 115, mit dem der Rohling 103 in einer Fräsmaschine eingespannt und gehalten wird. Der Körper 121 für dentale Anwendungen kann beispielsweise ein Keramikkörper, ein Kunststoffkörper oder ein Zirkonoxidkörper sein. Der Halteabschnitt 115 des dentalen Rohlings 103 ist im Abschnitt 119 der Aussparung 105 aufgenommen. Der dentale Rohling 103 weist beispielsweise Abmessungen von 18 mm x 14.5 mm x 14.5 mm auf. Der Aufnahmebehälter 100 kann vollständig aus Karton oder Faserstoff (Monoverpackung) hergestellt sein. In diesem Fall kann der Aufnahmebehälter 100 auf einfache Weise recycelt werden.

Die Aussparung 105 ist so bemessen, dass der dentale Rohling 103 in diese eingesetzt werden kann. Wenn der dentale Rohling eingesetzt ist, wird dieser durch die Klemmnasen 107 in der Aussparung 105 in Position gehalten. Ein unbeabsichtigtes Herausfallen oder Verrutschen des dentalen Rohlings 103 kann hierdurch verhindert werden.

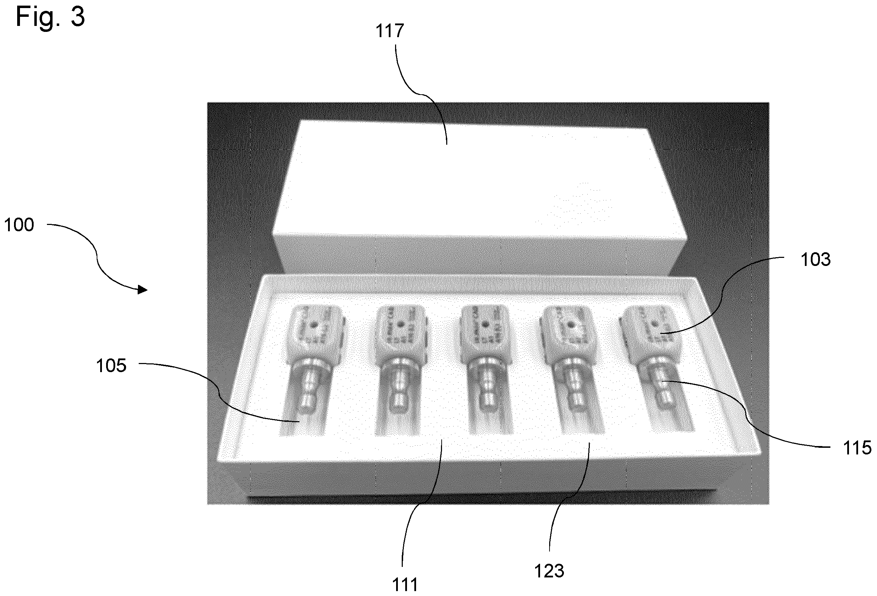

Fig. 3 zeigt eine perspektivische Ansicht des schachtelförmigen Aufnahmebehälters 100 mit mehreren dentalen Rohlingen 103. Der Aufnahmebehälter 100 ist aus einem Karton 111 gebildet und umfasst einen abnehmbaren Deckel 117. Die Übernahme der Blockformgebung kann in der Stanzkontur erfolgen. Die Aussparungen 105 sind in einem Einsatz 123 aus Karton 111 gebildet.

Der gezeigte Aufnahmebehälter 100 umfasst fünf nebeneinanderliegende Aussparungen 105, in die jeweils ein dentaler Rohling 103 eingelegt ist. Im Allgemeinen kann die Anzahl, Größe und Ausrichtung der Aussparungen 105 jedoch variieren. Im Allgemeinen kann auch die Größe des Aufnahmebehälters 100 ebenfalls variieren.

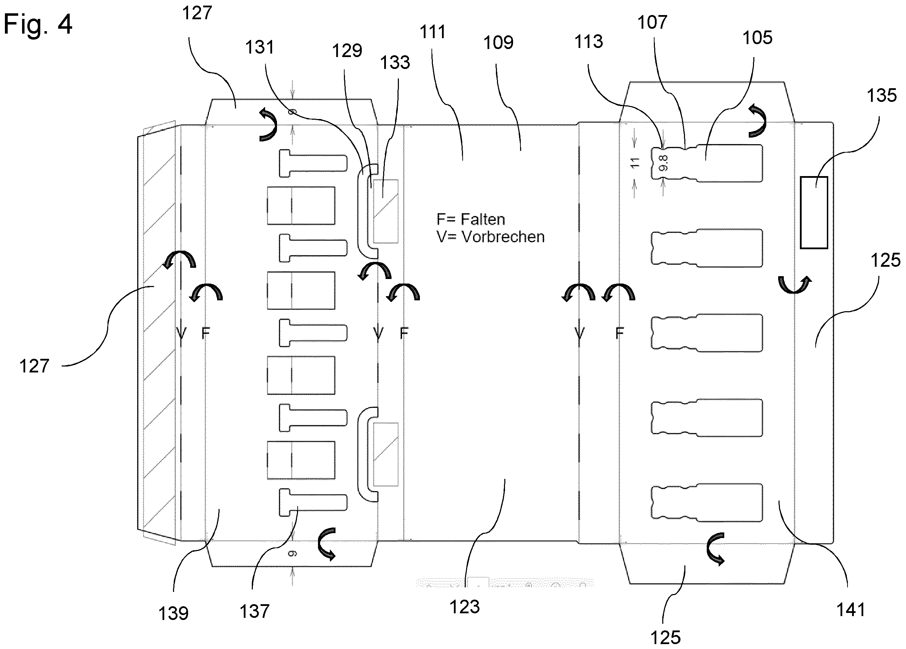

Fig. 4 zeigt eine technische Zeichnung eines Kartons 111 für den Aufnahmebehälter 100. Der Karton 111 weist beispielsweise eine Stärke von 350 g/m² auf und bildet einen Einsatz 123 für den schachtelförmigen Aufnahmebehälter 100. Die Aussparungen 105 sind in der vorgesehenen Größe aus dem Karton 111 ausgestanzt. Der Karton 111 wird an den mit V gekennzeichneten Linien vorgebrochen und an den mit F gekennzeichneten Linien gefaltet. Im vorgebrochenen, gefalteten und geklebten Zustand kann der Karton 111 in den Aufnahmebehälter 100 eingesetzt werden und stützt sich an den Seitwänden des Aufnahmebehälters 100 ab.

Die Seitenlaschen 125 werden nach hinten gefaltet und der Boden 109 nach Innen gefaltet, so dass diesen parallel zur Oberlage 141 liegt. Die Zwischenlage 139 wird zwischen den Boden 109 und die Oberlage 141 geschoben. Die Zwischenlage 139 befindet sich im gefalteten Zustand zwischen dem Boden 109 und der Oberlage 141, in der die Aussparungen 105 für die dentalen Rohlinge 103 gebildet sind.

Die Klemmnasen 107 der Aussparungen 105 sind durch Laschen gebildet, die rundliche Vorsprünge 113 bilden und seitlich in die Aussparung 105 hineinragen. Die Klemmnasen 107 können beispielsweise 0,6 mm vorspringen, so dass eine 11 mm breite Aussparung 105 durch Klemmnasen 107 auf beiden Seiten auf 9,8 mm verengt wird. Dadurch kann beispielsweise ein 10,5 mm breiter dentaler Rohling 103 in der Aussparung 105 aufgenommen werden, ohne dass dieser unbeabsichtigt herausfällt oder verrutscht.

Im gefalteten Zustand sind die Aussparungen 105 in einer Ebene des Kartons 111 und der Boden 109 in einer anderen Ebene des Kartons 111 gebildet. Zwischen diesen beiden Ebenen befindet sich die Zwischenlage 139, die ebenfalls durch einen Abschnitt des Kartons 111 gebildet wird. Die Zwischenlage 139 bildet eine Auflagefläche, auf die der eingesetzte dentale Rohling 103 auflegbar ist. Die Zwischenlage 139 umfasst zudem weitere T-förmige Aussparungen 137, in die Halteabschnitte 115 mit einem größeren Durchmesser einsinken. Durch die Zwischenlage 139 wird ein zu tiefes Einsinken des dentalen Rohlings 103 in die Aussparung 105 verhindert und der dentale Rohling 103 in der Mitte des gefalteten Kartons 111 gehalten.

Auch der Boden 109 ist durch die Abstandsabschnitte 129 ebenfalls zu der Zwischenlage 139 und der Oberlage 141 beabstandet. Die Abstandsabschnitte 129 stabilisieren die Ebene des Bodens 109, der Zwischenlage 139 und der Oberlage 141 gegenseitig.

Die Abstandsabschnitte 129 werden zu diesem Zweck senkrecht nach vorne gefaltet. Der vorspringende Rand der Abstandsabschnitte 129 liegt im gefalteten Zustand an der Innenseite der Oberlage 141 an. Die Seitenlaschen 127 werden senkrecht nach hinten gefaltet und stützen den Boden 109 am Rand ab. Durch die Seitenlaschen 127 wird die Zwischenlage 139 gegenüber dem Boden 109 stabilisiert.

Durch die Zwischenlage 139 werden die dentalen Rohlinge 103 beabstandet zu dem Boden des Aufnahmebehälters 100 gehalten, so dass diese in der Mitte des Aufnahmebehälters 100 angeordnet sind. Dadurch können Transportschäden verhindert werden.

Der Ausschnitt 131 für Klebelasche 133 wird geklappt und an die Oberseite der Einlage geklebt. Die Klebelasche 133 wird von oben nach unten geklappt und an der Stelle 135 auf die untere Lage geklebt. Die Klebelasche 133 stabilisiert den Abstand von der Zwischenlage 139 zur unteren Lage des Bodens 109.

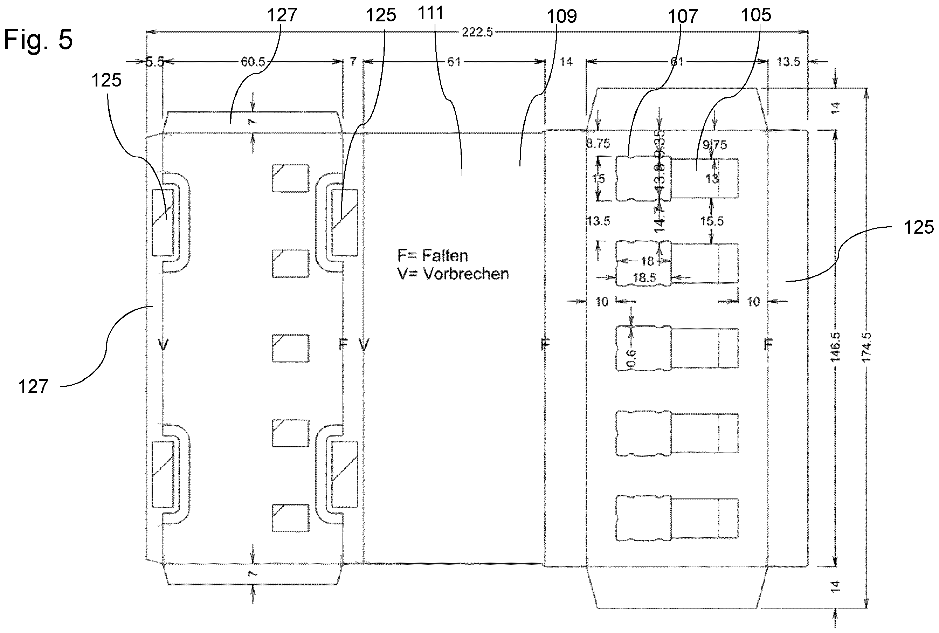

Fig. 5 zeigt eine technische Zeichnung eines weiteren Kartons 111 zum Herstellen des Aufnahmebehälters 100 mit Maßangaben in mm. Die Aussparungen 105 sind derart geformt, dass diese andere dentale Rohlinge 103 aufnehmen können. Der Aufnahmebehälter 100 kann im gefalteten Zustand beispielsweise Abmessungen von 146,5 mm Länge, 61 mm Breite und 14 mm Höhe aufweisen. Die Klemmnasen 107 können beispielsweise 0,75 mm vorspringen, so dass eine 15 mm breite Aussparung 105 auf 13,5 mm verengt wird.

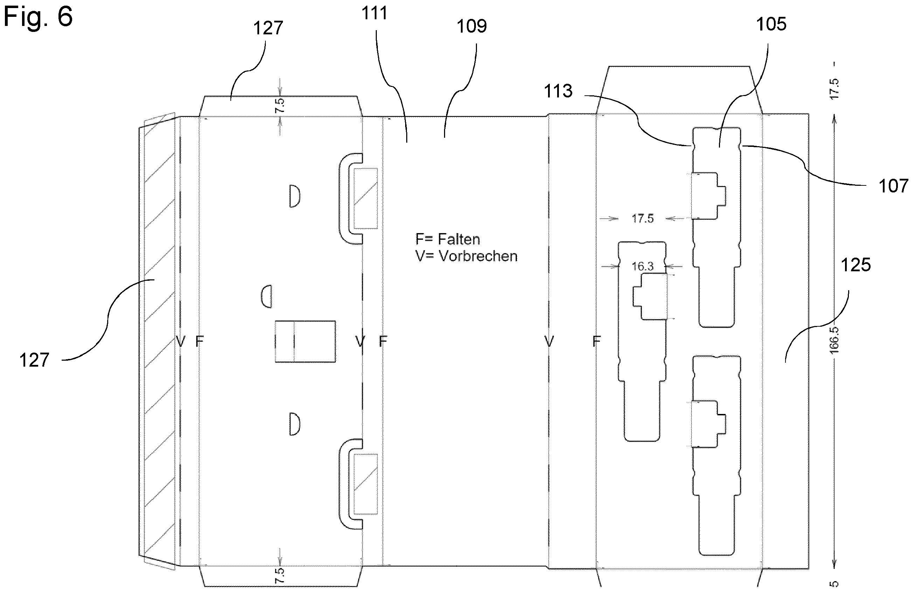

Fig. 6 zeigt eine technische Zeichnung eines weiteren Kartons 111 zum Herstellen des Aufnahmebehälters 100. Der Karton 111 weist drei Aussparungen 105 für weitere dentale Rohlinge 103 auf. Die Klemmnasen 107 können beispielsweise auch 0,6 mm vorspringen und eine 17,5 mm breite Aussparung 105 auf 16,3 mm verengen.

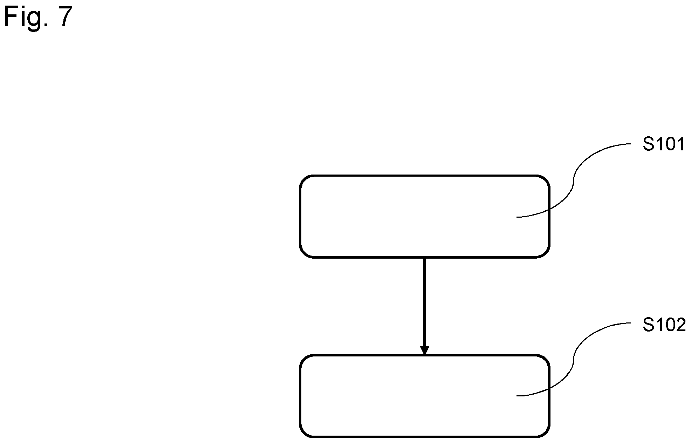

Fig. 7 zeigt ein Blockdiagramm zum Aufnehmen eines dentalen Rohlings 103. In Schritt S101 wird der dentale Rohlings 103 in eine Aussparung 105 eingelegt. In Schritt S102 wird der dentale Rohling 103 in der Aussparung 105 mit einer vorspringenden Klemmnase 107 eingelegt. Hierdurch wird der dentale Rohling 103 sicher in der Aussparung 105 gehalten, so dass ein unbeabsichtigtes Herausfallen verhindert wird.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Alle Verfahrensschritte können durch Vorrichtungen implementiert werden, die zum Ausführen des jeweiligen Verfahrensschrittes geeignet sind. Alle Funktionen, die von gegenständlichen Merkmalen ausgeführt werden, können ein Verfahrensschritt eines Verfahrens sein.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Aufnahmebehälter
- 103: dentaler Rohling
- 105: Aussparung
- 107: Klemmnase
- 109: Boden
- 111: Karton
- 113: Vorsprung
- 115: Halteabschnitt
- 117: Deckel
- 119: Abschnitt
- 121: Körper
- 123: Einsatz
- 125: Seitenlasche
- 127: Seitenlasche
- 129: Abstandsabschnitt
- 131: Ausschnitt
- 133: Klebelasche
- 135: Stelle
- 137: Aussparung
- 139: Zwischenlage
- 141: Oberlage

## Patentansprüche

1. Aufnahmebehälter (100) für einen dentalen Rohling (103), mit:
- einer Aussparung (105) zum Einlegen des Rohlings (103); und
- einer vorspringenden Klemmnase (107) zum Festklemmen des Rohlings (103), die in die Aussparung (105) hineinragt.

2. Aufnahmebehälter (100) nach Anspruch 1, wobei der Aufnahmebehälter (100) zwei vorspringende Klemmnasen (107) umfasst.

3. Aufnahmebehälter (100) nach Anspruch 2, wobei die beiden Klemmnasen (107) auf einer Seite der Aussparung (105) angeordnet sind.

4. Aufnahmebehälter (100) nach Anspruch 2, wobei die beiden Klemmnasen (107) auf gegenüberliegenden Seiten der Aussparung (107) angeordnet sind.

5. Aufnahmebehälter (100) nach einem der vorangehenden Ansprüche, wobei die Aussparung (105) einen rechteckigen Querschnitt aufweist.

6. Aufnahmebehälter (100) nach einem der vorangehenden Ansprüche, wobei die Aussparung (105) einen federnden Boden (109) umfasst.

7. Aufnahmebehälter (100) nach einem der vorangehenden Ansprüche, wobei der Aufnahmebehälter (100) einen abnehmbaren Deckel (117) umfasst.

8. Aufnahmebehälter (100) nach einem der vorangehenden Ansprüche, wobei die Klemmnase (107) durch einen rundlichen Vorsprung (113) gebildet ist.

9. Aufnahmebehälter (100) nach einem der vorangehenden Ansprüche, wobei die Aussparung (105) einen Abschnitt (119) zum Einlegen eines Halteabschnitts (115) des dentalen Rohlings (103) umfasst.

10. Aufnahmebehälter (100) nach einem der vorangehenden Ansprüche, wobei die Aussparung (105) in einem Karton (111) gebildet ist.

11. Aufnahmebehälter (100) nach Anspruch 10, wobei der Karton (111) in den Aufnahmebehälter (100) einsetzbar ist.

12. Aufnahmebehälter (100) nach Anspruch 10 oder 11, wobei der Karton (111) einen Abstandsabschnitt (129) zum Abstützen des Kartons (111) innerhalb des Aufnahmebehälters (100) umfasst.

13. Aufnahmebehälter (100) nach einem der Ansprüche 10 oder 12, wobei die Klemmnase (107) durch den Karton (111) gebildet ist.

14. Aufnahmebehälter (100) nach einem der Ansprüche 10 bis 13, wobei der Karton (111) einen Boden (109) bildet, auf den der dentale Rohling (103) auflegbar ist.

15. Verfahren zum Aufnehmen eines dentalen Rohlings (103), mit den Schritten:
- Einlegen (S101) des Rohlings (103) in eine Aussparung (105); und
- Festklemmen (S102) des Rohlings (103) in der Aussparung (105) mit einer vorspringenden Klemmnase (107).
